# EUROPEAN PATENT APPLICATION

(11) **EP 4 017 072 A1**
(43) Date of publication of application: **22.06.2022**
(21) Application number: 20855185.3
(22) Date of filing: 17.07.2020
(51) Int. Cl.: H04W 24/02

(54) **METHOD FOR PROCESSING ABNORMAL TERMINAL, NETWORK MANAGEMENT DEVICE AND COMPUTER-READABLE MEDIUM**

(30) Priority: 22.08.2019 CN 201910776929
(71) Applicant: ZTE Corporation, Shenzhen, Guangdong 518057 (CN)
(72) Inventor: TIAN, Wenkai, Shenzhen, Guangdong 518057 (CN)
(74) Representative: Swindell & Pearson Limited
(86) International application number: PCT/CN2020/102816
(87) International publication number: WO 2021/031761

(57) **Abstract**

A method for processing an abnormal terminal, a network management device, an electronic device and a computer-readable medium, which relate to the technical field of communications. The method for processing an abnormal terminal in an embodiment of the present disclosure comprises: generating a first protection table according to the correspondence between abnormal terminal type identifiers and abnormal behavior types which are acquired when executing a minimization drive test task and which are uploaded by various base stations (S1); uploading the first protection table to a cloud server so that the cloud server collects first protection tables uploaded by various network management devices so as to generate a second protection table (S2); and receiving the second protection table issued by the cloud server, and issuing to a base station the correspondence between at least part of the abnormal terminal type identifiers and abnormal behavior types in the second protection table so that the base station controls a terminal having an abnormal terminal type identifier to terminate the execution of the minimization drive test task (S3).

## Description

### CROSS-REFERENCE TO RELATED APPLICATION

This application is filled based on the Chinese patent application No. 201910776929.6 filed August 22, 2019, and claims the priority of the Chinese patent application, the entire contents of which are incorporated herein by reference.

### TECHNICAL FIELD

The present disclosure relates to the technical field of communication, and in particular to a method for processing an abnormal terminal device, a network management device, an electronic device, and a computer-readable storage medium.

### BACKGROUND

In the field of wireless communication, with the popularization of mobile communication and the wide application of mobile terminal devices, the mobile market is flooded with various types of terminal devices. Among numerous types of terminal devices, there are some abnormal terminal devices. With regard to the abnormal terminal devices, due to hardware defects or failure to strictly implement business behaviors according to protocols, abnormal phenomena such as call drop, access failures, handover failures, or frequent reporting of measurement data to base stations occur when performing specific services, which seriously affects key indicators, such as the drop rate, re-establishment rate, access success rate, and handover success rate, of the network and brings great difficulties to the maintenance and measurement of the entire network.

Minimization Drive Test (MDT) is designed to allow commercial terminal devices on the existing network to replace manual drive tests in related data measurement and reporting. The network analyzes the coverage, handover, access, interference, etc., of the existing network according to measurements reported by the terminal devices, and finds and solves problems such as coverage, handover, access, and interference in the network.

### SUMMARY

The present disclosure aims to at least solve one of the technical problems existing in some situations, and to provide a method for processing an abnormal terminal device.

According to an embodiment of the present disclosure, provided is a method for processing an abnormal terminal device. The method may include: generating first protection tables according to corresponding relationships between acquired abnormal terminal type identifiers and abnormal behavior types uploaded by base stations when performing minimization drive test tasks; uploading the first protection tables to a cloud server to allow the cloud server to summarize the first protection tables uploaded by respective network management devices to generate a second protection table; and receiving the second protection table issued by the cloud server, and issuing at least part of the corresponding relationships between the abnormal terminal type identifiers and the abnormal behavior types in the second protection table to the base stations, so that the base stations control terminal devices with the abnormal terminal type identifiers to terminate the execution of the minimization drive test tasks.

According to another embodiment of the present disclosure, provided is a network management device. The device may include: a generation module, an uploading module and a control module. The generation module is configured to generate first protection tables according to corresponding relationships between acquired abnormal terminal type identifiers and abnormal behavior types uploaded by base stations when performing minimization drive test tasks. The uploading module is configured to upload the first protection tables to a cloud server to allow the cloud server to summarize the first protection tables uploaded by respective network management devices to generate a second protection table. The control module is configured to receive the second protection table issued by the cloud server, and issue at least part of the corresponding relationships between the abnormal terminal type identifiers and the abnormal behavior types in the second protection table to the base stations, so that the base stations control terminal devices with the abnormal terminal type identifiers to terminate the execution of the minimization drive test tasks.

According to yet another embodiment of the present disclosure, provided is an electronic device. The electronic device may include: one or more processors and a storage device having one or more programs stored thereon. The one or more programs, when executed by the one or more processors, cause the one or more processors to carry out the methods described above.

According to yet another embodiment of the present disclosure, provided is a computer-readable storage medium having computer programs stored thereon which, when executed by a processor, cause the processor to carry out the methods described above.

### BRIEF DESCRIPTION OF DRAWINGS

FIG. 1 is a schematic flowchart of a method for processing an abnormal terminal device according to an embodiment of the present disclosure;
FIG. 2 is a schematic flowchart of step S0 according to an embodiment of the present disclosure;
FIG. 3 is a schematic flowchart of steps S31-S35 in step S3 according to an embodiment of the present disclosure;
FIG. 4 is a schematic flowchart of steps S36-S37 in step S3 according to an embodiment of the present disclosure;
FIG. 5 is a schematic structural block diagram of a network management device according to an embodiment of the present disclosure;
FIG. 6 is another schematic structural block diagram of a network management device according to an embodiment of the present disclosure;
FIG. 7 is a schematic structural block diagram of a control module of a network management device according to an embodiment of the present disclosure;
FIG. 8 is another schematic structural block diagram of a control module of a network management device according to an embodiment of the present disclosure; and
FIG. 9 is a schematic diagram of an electronic device according to an embodiment of the present disclosure.

### DETAILED DESCRIPTION

In order to make those having ordinary skills in the art better understand the technical schemes of the present disclosure, a method for processing an abnormal terminal device, a network management device, an electronic device, and a computer-readable storage medium provided by the present disclosure will be described in detail below in conjunction with the accompanying drawings.

Example embodiments are described more fully hereinafter with reference to the accompanying drawings, but the embodiments may be embodied in different forms and should not be construed as limited to the embodiments set forth herein. Rather, these embodiments are provided to make the present disclosure thorough and complete, and will enable those having ordinary skills in the art to fully understand the scope of the present disclosure.

As used herein, the term "and/or" includes any and all combinations of one or more associated listed items.

Terms used herein are used to describe specific embodiments merely, and are not intended to limit the present disclosure. As used herein, the singular forms "a/an" and "the" are intended to include the plural forms as well, unless the context clearly indicates otherwise. It will also be understood that the use of terms "comprising" and/or "made of ..." in this description indicates the presence of the feature, integrity, step, operation, element and/or component, but does not exclude the presence or addition of one or more other features, integrities, steps, operations, elements, components, and/or groups thereof.

Embodiments described herein may be described with reference to plan and/or cross-sectional views with the aid of idealized schematic views of the present disclosure. Accordingly, example illustrations may be modified according to manufacturing techniques and/or tolerances. Therefore, the embodiments are not limited to the embodiments shown in the accompanying drawings, but include modifications of configurations formed based on manufacturing processes. Thus, regions illustrated in the figures have schematic properties and the shapes of the regions illustrated in the figures are illustrative of the specific shapes of the regions of elements and are not intended to be limiting.

Unless otherwise defined, all terms (including technical and scientific terms) used herein have the same meaning as commonly understood by those having ordinary skills in the art. It will also be understood that terms such as those defined in commonly used dictionaries should be construed as having meanings consistent with their meanings in the context of the related art and the present disclosure, and will not be construed as having idealized or over-formal meanings, unless expressly so limited herein.

In some cases, base stations issue delay information measurements, Global Navigation Satellite System (GNSS) information measurements, Wireless Local Area Network (WLAN) information measurements, Bluetooth information measurements, and Logged MDT measurements, etc., to terminal devices. Due to the measurement capability defect of a faulty terminal, phenomena such as dropped connection, re-establishment, and handover failure occur. When the base stations issue Logged MDT, Radio Link Failure (RLF) MDT, Radio Resource Control Connection Establishment Failure (RCEF) MDT tasks to terminal devices, a terminal fails to clear data cache after reporting measurement data according to a protocol, which leads to unlimited reporting of measurement data, thus putting great pressure on back-end data parsing.

In a method for processing an abnormal terminal device provided by the embodiments of the present disclosure, a network management device is taken as an execution subject. Through information exchange among network management devices, base stations, and a cloud server, a tree-like sharing mechanism is realized. The cloud server can exchange information with multiple network management devices, and each network management device exchanges information with multiple base stations within its jurisdiction.

It should be noted here that, in the following embodiments, a so-called learning strategy refers to a specific method for acquiring corresponding relationships between abnormal terminal type identifiers and abnormal behavior types.

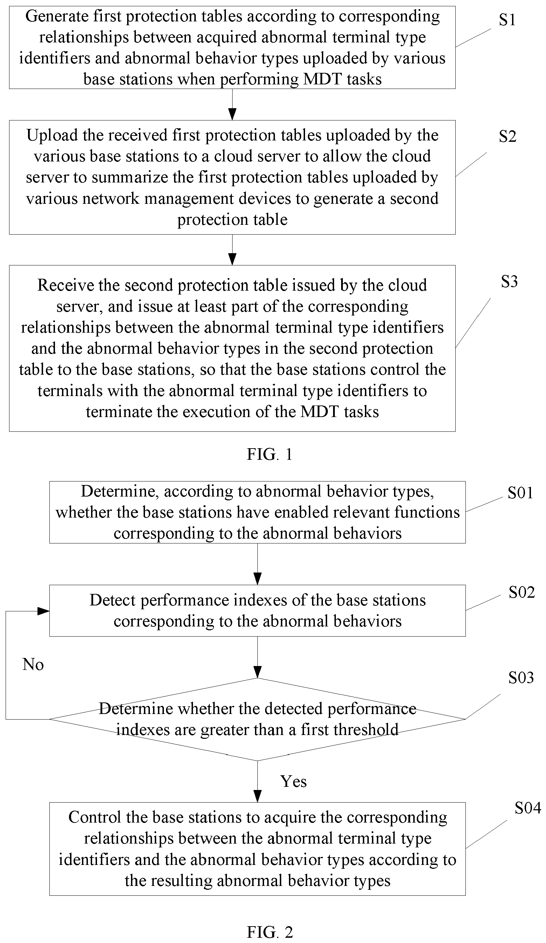

FIG. 1 is a schematic flowchart of a method for processing an abnormal terminal device according to an embodiment of the present disclosure.

Referring to FIG. 1, an embodiment of the present disclosure provides a method for processing an abnormal terminal device, including steps S1 to S3.

At S1, first protection tables are generated according to corresponding relationships between acquired abnormal terminal type identifiers and abnormal behavior types uploaded by base stations when minimization drive test tasks are performed.

It should be noted that, in the embodiments of the present disclosure, the first protection table is only a form for storing the corresponding relationships between the abnormal terminal type identifiers and the abnormal behavior types, and is not a table in a strict sense.

The terminal type identifier may be any one of Feature Group Indicator (FGI), International Mobile Equipment Identity (IMEI), International Mobile Equipment Identity-Type Authentication Code (IMEI-TAC), and International Mobile Equipment Identity-Software Version (IMEI-SV); and in this embodiment, Feature Group Indicator (FGI) is taken as an example for illustration.

In an embodiment, when a network management device detects that a performance index for network maintenance is abnormal, for example, a parameter such as the call drop rate of a base station or the utilization rate of a data analysis server is greater than a preset reference value, the network management device will control the base station to adopt a corresponding learning strategy and protection strategy for the terminal device according to the abnormal behavior type. The following examples are given for illustration.

Type I: the abnormal behavior type is the increase of the call drop rate. Specifically, when a network maintenance person finds that some terminal devices, after receiving Logged MDT, will enter a logged state for data measurement, and if they carry Logged MDT data for a next access, a reconfiguration timeout will occur. The learning strategy and protection strategy adopted for the terminal devices that are issued by network management devices to the base stations includes steps S011 to S014.

At S011, base stations are controlled to issue Logged MDT measurement tasks to accessed terminal devices.

At S012, the base stations record terminals carrying Logged MDT data and having reconfiguration timeout according to terminal type identifiers FGIs to form a record table.

At S013, the number of occurrences of terminals in the record table is counted according to the terminal type identifiers FGIs, the terminal type identifiers FGIs with the number of occurrences greater than a preset value are acquired and are recorded as abnormal terminal type identifiers FGIs, and corresponding relationships between the abnormal terminal type identifiers FGIs and abnormal behavior types are stored to generate first protection tables. The corresponding relationships between the abnormal terminal type identifiers FGIs and the abnormal behavior types may be represented by {FGIs, abnormal behavior types}.

At S014, the base stations adopt a protection strategy for terminal devices having the abnormal terminal type identifiers FGIs according to the first protection tables. The specific protection strategy is that when an abnormal behavior such as an increased call drop rate occurs in a later stage, the base stations will no longer issue the Logged MDT measurement tasks to the terminal devices with the abnormal terminal type identifiers FGIs.

Type II: the utilization rate of the data parsing server is greater than a preset value. When a network maintenance person finds that some terminal devices report Logged MDT data unlimitedly and frequently, which puts great pressure on the data parsing server, the learning strategy and protection strategy adopted for the terminal devices that are issued by the network management devices to the base stations include steps S021 to S024.

At S021, the base stations are controlled to issue Logged MDT measurement tasks to the terminal devices accessed.

At S022, a maximum number of measurements is calculated according to measurement durations and measurement intervals of the Logged MDT tasks.

At S023, whether the number of times of Logged MDT data a terminal reports each time is greater than the maximum number of measurements calculated in step S022 is determined. Since at least one measurement is included in the Logged MDT data reported by the terminal each time, theoretically, the maximum number of reports of the terminal does not exceed the maximum number of measurements. In a case that the number of times of Logged MDT data the terminal reports each time is greater than the maximum number of measurements, these FGIs are recorded as abnormal terminal type identifiers FGIs, and the corresponding relationships between the abnormal terminal type identifiers FGIs and the abnormal behavior types are stored to generate a first protection table. The corresponding relationships between the abnormal terminal type identifiers FGIs and the abnormal behavior types may be represented by {FGIs, abnormal behavior types}.

At S024, the base stations adopt a protection strategy for terminal devices having the abnormal terminal type identifiers FGIs according to the first protection tables. The specific protection strategy is that when an abnormal behavior such as an increased call drop rate occurs in a later stage, the base stations will no longer issue the Logged MDT measurement tasks to the terminal devices with the abnormal terminal type identifiers FGIs. In the meantime, the base stations no longer request the terminal devices with the abnormal terminal type identifiers FGIs to report Logged MDT data. At S1, the network management devices may receive the first protection tables acquired by the base stations according to the above steps.

It should be noted that, whether the learning strategy adopted by the base stations is based on the above-mentioned Type I or Type II abnormal behavior, the learning strategy is periodic, and in the above description only a specific method for a first learning period is described. For a subsequent learning, the base stations will no longer learn the identified abnormal terminal type identifiers, but only learn the unidentified abnormal terminal type identifiers to realize incremental learning. Because the abnormal terminal type identifiers are limited, with continuous learning of the unidentified abnormal terminal type identifiers, the learning results tend to converge, and the incremental learning method ensures the convergence of the learning process. The way the base stations identify the abnormal terminal type identifiers can rely on self-learning, or on learning information shared by other base stations.

At S2, the received first protection tables uploaded by the base stations are uploaded to a cloud server to allow the cloud server to summarize the first protection tables uploaded by respective network management devices to generate a second protection table.

It should be noted that, in the embodiments of the present disclosure, the second protection table is only a form for storing the corresponding relationships between the abnormal terminal type identifiers and the abnormal behavior types, and is not a table in a strict sense.

At S2, the network management devices summarize the received first protection tables uploaded by the base stations, and summarize the corresponding relationships between different abnormal terminal type identifiers and abnormal behavior types in the first protection tables into a second protection table. The cloud server issues the second protection table to the network management devices, so that the learning results of the base stations connected to different network management devices are shared, making the overall learning more effective.

At S3, the second protection table issued by the cloud server is received, and at least part of the corresponding relationships between the abnormal terminal type identifiers and the abnormal behavior types in the second protection table are issued to the base stations, so that the base stations control the terminal devices with the abnormal terminal type identifiers to terminate the execution of the MDT tasks.

At S3, the network management devices receive the second protection table issued by the cloud server. Then, based on the number of the corresponding relationships between the abnormal terminal type identifiers and the abnormal behavior types that can be received by the base stations, a corresponding number of the corresponding relationships between the abnormal terminal type identifiers and the abnormal behavior types in the received second protection table are issued to the corresponding base stations, so that the base stations control the terminal devices with the abnormal terminal type identifiers to terminate the execution of the MDT tasks.

At the same time, since the second protection table is obtained by summarizing the first protection tables received by the network management devices that are uploaded by the base stations, and then summarizing the corresponding relationships between different abnormal terminal type identifiers and abnormal behavior types in the first protection tables, the learning results of the base stations connected to different network management devices are shared, so that the overall learning is more effective, the protection range of each base station is wider, and the consumption of base station performance is lower.

FIG. 2 is a schematic flowchart of step S0 according to an embodiment of the present disclosure.

In some embodiments, referring to FIG. 2, S0 is further included before S1 in the foregoing embodiment of the present disclosure. Step S0 may include steps S01 to S04.

At S01, whether the base stations have enabled relevant functions corresponding to the abnormal behaviors is determined according to abnormal behavior types.

At S01, network management devices need to determine whether the base stations have enabled the relevant functions corresponding to the abnormal behaviors according to the abnormal behavior types that correspond to performance indexes detected by a network maintenance person and are received by the network management devices. Only when the base stations have enabled corresponding functions, the network management devices are allowed to control the base stations to carry out learning strategies for abnormal behaviors, thereby ensuring the accuracies of enabling ranges of the learning strategies. The learning strategies are, for example, learning strategies corresponding to Type I and Type II abnormal behaviors in the foregoing embodiments. If it is determined at S01 that the base stations have enabled the relevant functions corresponding to the abnormal behaviors, step S02 is performed; and if it is determined that the base stations have not enabled the relevant functions corresponding to the abnormal behaviors, the method is terminated.

At S02, performance indexes of the base stations corresponding to the abnormal behaviors are detected.

At S02, the network management devices acquire corresponding performance indexes according to the abnormal behavior types of the base stations. In an embodiment, the performance indexes detected by the network management devices may be parameters such as the call drop rates of the base stations, the utilization rates of the data parsing servers, and the like.

At S03, whether the detected performance indexes are greater than a first threshold is determined.

At S3, the network management devices determine whether the performance indexes detected in S02 for network maintenance are greater than the first threshold, for example, parameters such as the call drop rates of the base stations and the utilization rates of the data analysis servers are greater than preset reference values. If the performance indexes are determined to be greater than the first threshold, the method proceeds to step S04; and if the performance indexes are determined to be less than or equal to the first threshold, the method returns to step S02.

At S04, the base stations are controlled to acquire the corresponding relationships between the abnormal terminal type identifiers and the abnormal behavior types according to the resulting abnormal behavior types.

At S04, when a network management device detects that a performance index for network maintenance is abnormal, for example, a parameter such as the call drop rate of a base station or the utilization rate of a data analysis server is greater than a preset reference value, the network management device will control the base station to adopt a corresponding learning strategy and protection strategy for the terminal according to the abnormal behavior type. The specific learning strategy and protection strategy may be the same as those in steps S011-5014 and steps S021-S024 in the foregoing embodiments, and therefore will not be described in detail.

It should be noted here that, the learning of the base stations controlled by the network management devices (that is, the process of acquiring the corresponding relationships between the abnormal terminal type identifiers and the abnormal behavior types) is periodic. Therefore, the base stations will no longer learn the identified abnormal terminal type identifiers, but only learn the unidentified abnormal terminal type identifiers to realize incremental learning. Because the abnormal terminal type identifiers are limited, with continuous learning of the unidentified abnormal terminal type identifiers, the learning results tend to converge, and the incremental learning method ensures the convergence of the learning process. The way the base stations identify the abnormal terminal type identifiers can rely on self-learning, or on learning information shared by other base stations.

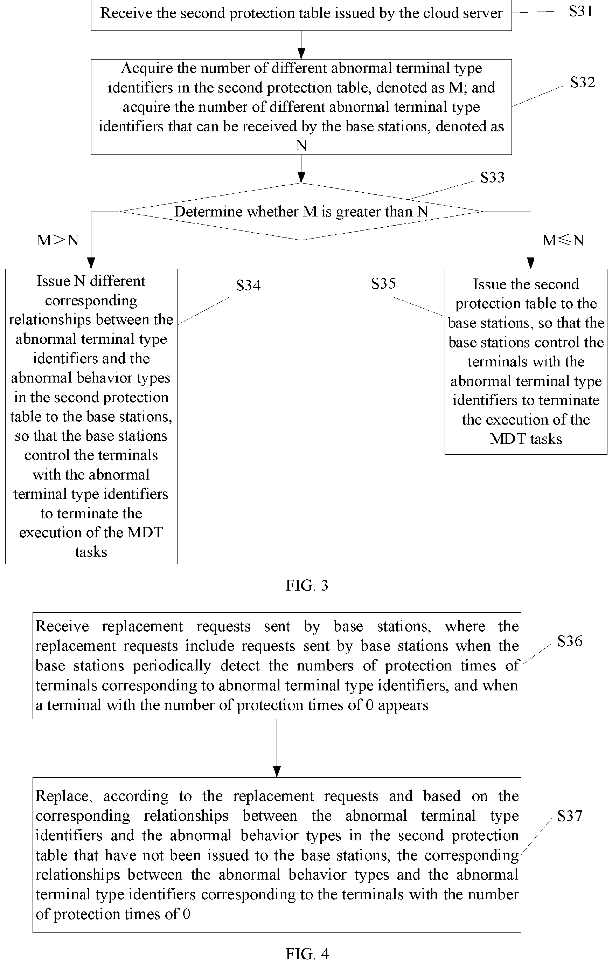

FIG. 3 is a schematic flowchart of steps S31-S35 in S3 according to an embodiment of the present disclosure.

In some embodiments, referring to FIG. 3, S3 in the foregoing embodiments may include steps S31 to S35.

At S31, the second protection table issued by the cloud server is received.

At S31, the network management devices receive the second protection table issued by the cloud server. The second protection table includes multiple corresponding relationships between the abnormal terminal type identifiers and the abnormal behavior types.

At S32, the number of different abnormal terminal type identifiers in the second protection table is acquired and denoted as M, and the number of different abnormal terminal type identifiers that can be received by the base stations is acquired and denoted as N.

At S32, the network management devices acquire the number of different abnormal terminal type identifiers in the second protection table, which is denoted as M, and acquire the number of different abnormal terminal type identifiers that can be received by the base stations, which is denoted as N. It should be noted that, the number of different abnormal terminal type identifiers in the second protection table is not equal to the number of corresponding relationships between the abnormal terminal type identifiers and the abnormal behavior types in the second protection table, because in the second protection table, there may be a case where in two corresponding relationships between the abnormal terminal type identifiers and the abnormal behavior types, the abnormal terminal type identifiers are the same, that is, there exits {FGI-1, abnormal behavior type 1} and {FGI-1, abnormal behavior type 2}.

At S33, whether M is greater than N is determined.

At S33, if the network management devices determine that M > N, step S34 is performed; and if the network management devices determine that M ≤ N, step S35 is performed.

At S34, N different corresponding relationships between the abnormal terminal type identifiers and the abnormal behavior types in the second protection table are issued to the base stations, so that the base stations control the terminal devices with the abnormal terminal type identifiers to terminate the execution of the MDT tasks.

At S34, the network management devices may sort M different corresponding relationships between the abnormal terminal type identifiers and the abnormal behavior types in the second protection table, and issue the top N corresponding relationships to the base stations, or it is also possible to randomly select N corresponding relationships in the M different corresponding relationships between the abnormal terminal type identifiers and the abnormal behavior types to send to the base stations.

At S35, the second protection table is issued to the base stations, so that the base stations control the terminal devices with the abnormal terminal type identifiers to terminate the execution of the MDT tasks.

At S34, the network management devices may issue all the corresponding relationships between the abnormal terminal type identifiers and the abnormal behavior types in the second protection table to the base stations, so that the base stations control the terminal devices with the abnormal terminal type identifiers to terminate the execution of the MDT tasks.

FIG. 4 is a schematic flowchart of steps S36-S37 in S3 according to an embodiment of the present disclosure.

In some embodiments, referring to FIG. 4, after step S34 in the foregoing embodiments, steps S36 to S37 may be further included.

At S36, replacement requests sent by base stations are received, where the replacement requests include requests sent by base stations when the base stations periodically detect the numbers of protection times of terminal devices corresponding to abnormal terminal type identifiers, and when a terminal with the number of protection times of 0 appears.

In an embodiment, when base stations periodically detect the numbers of protection times of terminal devices corresponding to abnormal terminal type identifiers, if it is found that the number of protection times of a terminal corresponding to a certain abnormal terminal type identifier is 0, replacement requests are sent to network management devices.

At S37, according to the replacement requests and based on the corresponding relationships between the abnormal terminal type identifiers and the abnormal behavior types in the second protection table that have not been issued to the base stations, the corresponding relationships between the abnormal behavior types and the abnormal terminal type identifiers corresponding to the terminal devices with the number of protection times of 0 are replaced.

In an embodiment, after receiving the replacement requests issued by the base stations, the network management devices replace, based on the corresponding relationships between the abnormal terminal type identifiers and the abnormal behavior types in the second protection table that have not been issued to the base stations, the corresponding relationships between the abnormal behavior types and the abnormal terminal type identifiers corresponding to the terminal devices with the number of protection times of 0.

In the method for processing an abnormal terminal provided by the embodiments of the present disclosure, a network management device summarizes corresponding relationships between abnormal terminal type identifiers and abnormal behavior types uploaded by base stations connected to the network management device to obtain a first protection table, and uploads the first protection table to a cloud server. Then, the cloud server summarizes the first protection tables uploaded by respective network management devices connected to the cloud server to generate a second protection table. In this case, the corresponding relationships between the abnormal terminal type identifiers and the abnormal behavior types in the second protection table are a summary of the corresponding relationships between the abnormal terminal type identifiers and abnormal behavior types uploaded by the base stations connected to multiple network management devices. Finally, the network management devices receive the second protection table issued by the cloud server, and issue at least part of the corresponding relationships between the abnormal terminal type identifiers and the abnormal behavior types in the second protection table to the base stations, so that the base stations control the terminal devices with the abnormal terminal type identifiers to terminate the execution of the MDT tasks. In this way, the learning results of the base stations connected to different network management devices are shared, so that the overall learning is more effective, the protection range of each base station is wider, and the consumption of base station performance is lower.

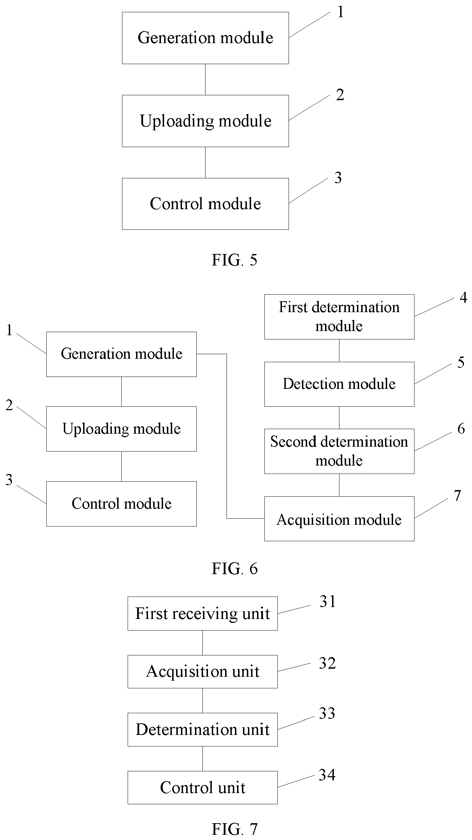

FIG. 5 is a schematic block diagram of a network management device according to an embodiment of the present disclosure.

Referring to FIG. 5, an embodiment of the present disclosure provides a network management device, which may be used for executing the method for processing an abnormal terminal in any of the foregoing embodiments. The network management device includes: a generation module 1, an uploading module 2 and a control module 3.

In an embodiment, the generation module 1 is configured to generate first protection tables according to corresponding relationships between acquired abnormal terminal type identifiers and abnormal behavior types uploaded by base stations when performing minimization drive test tasks.

The uploading module 3 is configured to upload the first protection tables to a cloud server to allow the cloud server to summarize the first protection tables uploaded by respective network management devices to generate a second protection table.

The control module 3 is configured to receive the second protection table issued by the cloud server, and issue at least part of the corresponding relationships between the abnormal terminal type identifiers and the abnormal behavior types in the second protection table to the base stations, so that the base stations control the terminal devices with the abnormal terminal type identifiers to terminate the execution of the MDT tasks.

It should be noted that, the generation module 1 in the embodiments of the present disclosure may be configured to perform S1 in the foregoing embodiments. The uploading module 2 may be configured to perform S2 in the foregoing embodiments. The control module 3 may be configured to perform S3 in the foregoing embodiments.

FIG. 6 is another schematic block diagram of a network management device according to an embodiment of the present disclosure.

In some embodiments, referring to FIG. 6, the network management device not only includes the above structure, but may further include: a first determination module 4, a detection module 5, a second determination module 6, and a first acquisition module 7.

In an embodiment, the first determination module 4 is configured to determine, according to abnormal behavior types, whether the base stations have enabled relevant functions corresponding to the abnormal behaviors.

The detection module 5 is configured to detect performance indexes of the base stations corresponding to the abnormal behaviors when the first determination module 4 determines that the base stations have enabled the relevant functions corresponding to the abnormal behaviors.

The second determination module 6 is configured to determine whether the detected performance indexes are greater than a first threshold.

The acquisition module 7 is configured to control, when the second determination module 6 determines that the detected performance indexes are greater than the first threshold, the base stations to acquire the corresponding relationships between the abnormal terminal type identifiers and the abnormal behavior types according to the resulting abnormal behavior types.

It should be noted that, the first determination module 4 in the embodiments of the present disclosure may be configured to perform S01 in the foregoing embodiments. The detection module 5 may be configured to perform S02 in the foregoing embodiments. The second determination module 6 may be configured to perform S03 in the foregoing embodiments. The acquisition module 7 may be configured to perform S04 in the foregoing embodiments.

FIG. 7 is a schematic block diagram of a control module of a network management device according to an embodiment of the present disclosure.

In some embodiments, referring to FIG. 7, the above-mentioned control module may include: a first receiving unit 31, an acquisition unit 32, a determination unit 33, and a control unit 34.

In an embodiment, the first receiving unit 31 is configured to receive the second protection table issued by the cloud server.

The acquisition unit 32 is configured to acquire the number of different abnormal terminal type identifiers in the second protection table, denoted as M; and acquire the number of different abnormal terminal type identifiers that can be received by the base stations, denoted as N.

The determination unit 33 is configured to determine whether M is greater than N.

The control unit 34 is configured to issue, when the determination unit 33 determines that M > N, N different corresponding relationships between the abnormal terminal type identifiers and the abnormal behavior types in the second protection table to the base stations, so that the base stations control the terminal devices with the abnormal terminal type identifiers to terminate the execution of the MDT tasks. The control unit 34 is further configured to issue, when the determination unit 33 determines that M ≤ N, the second protection table to the base stations, so that the base stations control the terminal devices with the abnormal terminal type identifiers to terminate the execution of the MDT tasks.

It should be noted here that, the first receiving unit 31 in the embodiments of the present disclosure may be configured to perform S31 in the foregoing embodiments. The acquisition unit 32 may be configured to perform S32 in the foregoing embodiments. The determination unit 33 may be configured to perform S33 in the foregoing embodiments. The control unit 34 may be configured to perform S34 and S35 in the foregoing embodiments.

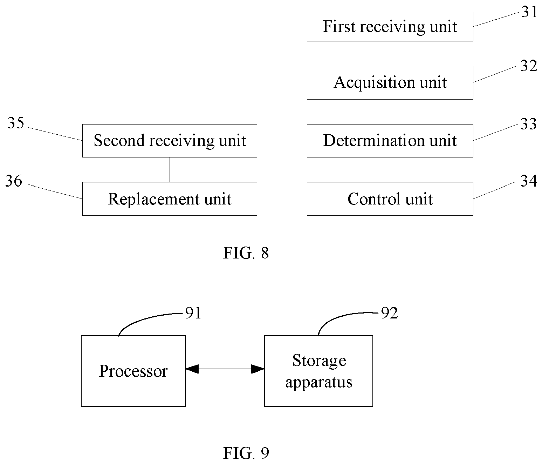

FIG. 8 is another schematic block diagram of a control module of a network management device according to an embodiment of the present disclosure.

In some embodiments, referring to FIG. 8, the above-mentioned control module not only includes the above-mentioned structure, but may also include: a second receiving unit 35 and a replacement unit 36.

In an embodiment, the second receiving unit 35 is configured to receive replacement requests sent by base stations, where the replacement requests include requests sent by base stations when the base stations periodically detect the numbers of protection times of terminal devices corresponding to abnormal terminal type identifiers, and when a terminal with the number of protection times of 0 appears.

The replacement unit 36 is configured to replace, according to the replacement requests and based on the corresponding relationships between the abnormal terminal type identifiers and the abnormal behavior types in the second protection table that have not been issued to the base stations, the corresponding relationships between the abnormal behavior types and the abnormal terminal type identifiers corresponding to the terminal devices with the number of protection times of 0.

It should be noted here that the second receiving unit 35 in the embodiments of the present disclosure may be configured to perform S36 in the foregoing embodiments. The replacement unit 36 may be configured to perform S37 in the foregoing embodiments.

The network management device provided in the embodiments of the present disclosure may adopt the method for processing an abnormal terminal device in the foregoing embodiments, that is, the network management device summarizes corresponding relationships between abnormal terminal type identifiers and abnormal behavior types uploaded by a base station connected to the network management device to obtain a first protection table, and uploads the first protection table to a cloud server, and then the cloud server summarizes the first protection tables uploaded by respective network management devices connected to the cloud server to generate a second protection table. In this case, the corresponding relationships between the abnormal terminal type identifiers and the abnormal behavior types in the second protection table are a summary of the corresponding relationships between the abnormal terminal type identifiers and abnormal behavior types uploaded by the base stations connected to multiple network management devices. Finally, the network management devices receive the second protection table issued by the cloud server, and issue at least part of the corresponding relationships between the abnormal terminal type identifiers and the abnormal behavior types in the second protection table to the base stations, so that the base stations control the terminal devices with the abnormal terminal type identifiers to terminate the execution of the MDT tasks. In this way, the learning results of the base stations connected to different network management devices are shared, so that the overall learning is more effective, the protection range of each base station is wider, and the consumption of base station performance is lower.

Referring to FIG. 9, an embodiment of the present disclosure provides an electronic device. The electronic device may include: one or more processors 91 and a storage apparatus 92 having one or more programs stored thereon which, when executed by the one or more processors 91, cause the one or more processors 91 to carry out any one of the above methods.

An embodiment of the present disclosure provides a computer-readable medium having stored thereon computer programs which, when executed by a processor, cause the processor to carry out any one of the above methods.

It can be understood by those having ordinary skills in the art that all or some of the steps in the methods, systems, and functional modules/units in the apparatuses disclosed above may be implemented as software, firmware, hardware, and appropriate combinations thereof. In a hardware implementation, the division between functional modules/units mentioned in the above description does not necessarily correspond to the division of physical components. For example, one physical component may have multiple functions, or one function or step may be performed by several physical components cooperatively. Some or all physical components may be implemented as software executed by a processor, such as a central processing unit, digital signal processor or microprocessor, or as hardware, or as an integrated circuit, such as an application specific integrated circuit. Such software may be distributed on computer-readable media, which may include computer storage media (or non-transitory media) and communication media (or transitory media). As is well known to those having ordinary skills in the art, the term "computer storage media" includes both volatile and non-volatile, removable and non-removable media implemented in any method or technology for storing information such as computer-readable instructions, data structures, program modules or other data. Computer storage media include, but are not limited to, RAMs, ROMs, EEPROMs, flash memories or other memory technologies, CD-ROMs, digital versatile disks (DVDs) or other optical disk storage, magnetic cartridges, magnetic tapes, magnetic disk storage or other magnetic storage apparatuses, or any other media that can be used to store desired information and can be accessed by computers. In addition, as is well known to those having ordinary skills in the art, communication media typically contains computer-readable instructions, data structures, program modules, or other data in a modulated data signal such as carrier waves or other transport mechanisms, and may include any information delivery media.

Embodiments have been disclosed herein, and specific terms are employed for illustration and should only be construed in a general descriptive sense and not for limitation. In some instances, it will be apparent to those having ordinary skill in the art that features, characteristics and/or elements described in connection with a particular embodiment may be used alone or in combination with features, characteristics and/or elements described in connection with other embodiments, unless otherwise expressly indicated. Accordingly, it will be understood by those having ordinary skills in the art that various changes in forms and details may be made without departing from the scope of the present disclosure as set forth in the appended claims.

It should be understood that the above implementations are merely illustrative of the principles of the present disclosure, and the present disclosure is not limited thereto. For those having ordinary skills in the art, various modifications and improvements may be made without departing from the essence of the present disclosure, and shall all fall within the protection scope of the present disclosure.

## Claims

1. A method for processing an abnormal terminal device, comprising:
generating first protection tables according to corresponding relationships between acquired abnormal terminal type identifiers and abnormal behavior types uploaded by base stations when minimization drive test tasks are performed;
uploading the first protection tables to a cloud server to allow the cloud server to summarize the first protection tables uploaded by respective network management devices to generate a second protection table; and
receiving the second protection table issued by the cloud server, and issuing at least part of the corresponding relationships between the abnormal terminal type identifiers and the abnormal behavior types in the second protection table to the base stations, so that the base stations control terminal devices with the abnormal terminal type identifiers to terminate the execution of the minimization drive test tasks.

2. The method for processing an abnormal terminal device of claim 1, wherein prior to generating first protection tables according to corresponding relationships between acquired abnormal terminal type identifiers and abnormal behavior types uploaded by base stations when performing minimization drive test tasks, the method further comprises:
determining, according to abnormal behavior types, whether base stations have enabled relevant functions corresponding to the abnormal behaviors;
detecting, in response to a determination that the base stations have enabled the relevant functions corresponding to the abnormal behaviors, performance indexes of the base stations corresponding to the abnormal behaviors;
determining whether the detected performance indexes are greater than a first threshold; and
controlling, in response to a determination that the performance indexes are greater than the first threshold, the base stations to acquire the corresponding relationships between the abnormal terminal type identifiers and the abnormal behavior types according to the resulting abnormal behavior types.

3. The method for processing an abnormal terminal of claim 1, wherein the receiving the second protection table issued by the cloud server, and issuing at least part of the corresponding relationships between the abnormal terminal type identifiers and the abnormal behavior types in the second protection table to the base stations, so that the base stations control terminal devices with the abnormal terminal type identifiers to terminate the execution of the minimization drive test tasks comprises:
receiving the second protection table issued by the cloud server;
acquiring the number of different abnormal terminal type identifiers in the second protection table, denoted as M; and acquiring the number of different abnormal terminal type identifiers that can be received by the base stations, denoted as N;
determining whether M is greater than N;
issuing, in response to a determination that M > N, N different corresponding relationships between the abnormal terminal type identifiers and the abnormal behavior types in the second protection table to the base stations, so that the base stations control the terminal devices with the abnormal terminal type identifiers to terminate the execution of the minimization drive test tasks; and
issuing, in response to a determination that M ≤ N, the second protection table to the base stations, so that the base stations control the terminal devices with the abnormal terminal type identifiers to terminate the execution of the minimization drive test tasks.

4. The method for processing an abnormal terminal of claim 3, wherein after issuing, in response to a determination that M > N, N different corresponding relationships between the abnormal terminal type identifiers and the abnormal behavior types in the second protection table to the base stations, so that the base stations control the terminal devices with the abnormal terminal type identifiers to terminate the execution of the minimization drive test tasks, the method further comprises:
receiving replacement requests sent by base stations, wherein the replacement requests comprise requests sent by base stations in response to appearance of a terminal with the number of protection times of 0 when the base stations periodically detect the numbers of protection times of terminal devices corresponding to abnormal terminal type identifiers; and
replacing, according to the replacement requests and based on the corresponding relationships between the abnormal terminal type identifiers and the abnormal behavior types in the second protection table that have not been issued to the base stations, the corresponding relationships between the abnormal behavior types and the abnormal terminal type identifiers corresponding to the terminal devices with the number of protection times of 0.

5. The method for processing an abnormal terminal of claim 1, wherein the abnormal terminal type identifier comprises one of Feature Group Indicator, International Mobile Equipment Identity, International Mobile Equipment Identity-Type Authentication Code, and International Mobile Equipment Identity-Software Version.

6. A network management device, comprising:
a generation module, configured to generate first protection tables according to corresponding relationships between acquired abnormal terminal type identifiers and abnormal behavior types uploaded by base stations when performing minimization drive test tasks;
an uploading module, configured to upload the first protection tables to a cloud server to allow the cloud server to summarize the first protection tables uploaded by respective network management devices to generate a second protection table; and
a control module configured to receive the second protection table issued by the cloud server, and issue at least part of the corresponding relationships between the abnormal terminal type identifiers and the abnormal behavior types in the second protection table to the base stations, so that the base stations control terminal devices with the abnormal terminal type identifiers to terminate the execution of the minimization drive test tasks.

7. The network management device of claim 6, further comprising:
a first determination module, configured to determine, according to abnormal behavior types, whether base stations have enabled relevant functions corresponding to the abnormal behaviors;
a detection module, configured to detect performance indexes of the base stations corresponding to the abnormal behaviors in response to a determination by the first determination module that the base stations have enabled the relevant functions corresponding to the abnormal behaviors;
a second determination module, configured to determine whether the detected performance indexes are greater than a first threshold; and
an acquisition module, configured to control, in response to a determination by the second determination module that the detected performance indexes are greater than the first threshold, the base stations to acquire the corresponding relationships between the abnormal terminal type identifiers and the abnormal behavior types according to the corresponding abnormal behavior types.

8. The network management device of claim 6, wherein the control module comprises:
a first receiving unit, configured to receive the second protection table issued by the cloud server;
an acquisition unit, configured to acquire the number of different abnormal terminal type identifiers in the second protection table, denoted as M; and acquire the number of different abnormal terminal type identifiers that can be received by the base stations, denoted as N;
a determination unit, configured to determine whether M is greater than N; and
a control unit, configured to issue, in response to a determination by the determination unit that M > N, N different corresponding relationships between the abnormal terminal type identifiers and the abnormal behavior types in the second protection table to the base stations, so that the base stations control the terminal devices with the abnormal terminal type identifiers to terminate the execution of the minimization drive test tasks; and to issue, in response to a determination by the determination unit that M ≤ N, the second protection table to the base stations, so that the base stations control the terminal devices with the abnormal terminal type identifiers to terminate the execution of the minimization drive test tasks.

9. The network management device of claim 8, wherein the control module further comprises:
a second receiving unit, configured to receive replacement requests sent by base stations, wherein the replacement requests comprise requests sent by base stations in response to appearance of a terminal device with the protection number of 0 appears when the base stations periodically detect the numbers of protection times of terminal devices corresponding to abnormal terminal type identifiers; and
a replacement unit, configured to replace, according to the replacement requests and based on the corresponding relationships between the abnormal terminal type identifiers and the abnormal behavior types in the second protection table that have not been issued to the base stations, the corresponding relationships between the abnormal behavior types and the abnormal terminal type identifiers corresponding to the terminal devices with the number of protection times of 0.

10. An electronic device, comprising:
one or more processors;
a storage apparatus having stored thereon one or more programs which, when executed by the one or more processors, cause the one or more processors to carry out the method of any one of claims 1 to 5.

11. A computer-readable storage medium, having stored thereon computer programs which, when executed by a processor, cause the processor to carry out the method of any one of claims 1 to 5.
